# EUROPEAN PATENT SPECIFICATION

(11) **EP 2 230 493 B1**
(45) Date of publication and mention of the grant of the patent: **23.05.2012**
(21) Application number: 10250126.9
(22) Date of filing: 26.01.2010
(51) Int. Cl.: G01F 23/30, G01F 23/36, G01F 23/24, G01F 23/00

(54) **Device for detecting quantity of remaining fuel in vehicle fuel tank**
Vorrichtung zur Detektion der Menge verbleibenden Treibstoffs in einem Treibstofftank
Dispositif pour détecter la quantité de combustible restante dans un réservoir de combustible de véhicule

(30) Priority: 29.01.2009 JP 2009017968
(43) Date of publication of application: 22.09.2010
(73) Proprietor: Honda Motor Co., Ltd., Minato-ku Tokyo 107-8556 (JP)
(72) Inventor: Atsuyuki Kobayashi c/o Honda R&d Co., Ltd., Saitama 351-0193 (JP)
(74) Representative: Stevens, Jason Paul

(56) References cited:
- US-A- 4 437 162
- US-A- 4 773 260
- US-A- 5 105 063

## Description

The present invention relates to a device for detecting the quantity of fuel remaining in a vehicle fuel tank, which uses a float-type fuel quantity sensor, and also uses thermistors for detecting liquid surface levels in regions outside the range of motion of the float of the float-type fuel quantity sensor inside the fuel tank.

In JP-A-2004-125517, there is disclosed a device for detecting the quantity of fuel remaining in a fuel tank, in which a float-type fuel quantity sensor, and a thermistor disposed below the float-type fuel quantity sensor for detecting a liquid surface level in a region below the range of motion of the float of the float-type fuel quantity sensor, are arranged in the inside of the fuel tank.

Document US 4437162 discloses a remaining fuel detection device including a float-type quantity sensor and two thermistors fixed at predetermined fuel levels.

In such a remaining fuel quantity detection device, it may be the case that that the range of motion of the float of the float-type fuel quantity sensor is limited, depending on the shape of the fuel tank. When a filled-up position of fuel is above an upper limit position of a range of motion of the float of the float-type fuel quantity sensor, it is difficult to accurately ascertain the quantity of fuel remaining. In this case, it may be possible to detect the remaining fuel quantity in regions above and below the limit positions of the range of motion of the float of the float-type fuel quantity sensor using thermistors. However, when a plurality of thermistors is used, there arises a drawback that, immediately after the ignition switch is turned on, resistance values of the thermistors exhibit irregularity so that a detected value of the quantity of fuel remaining also exhibits irregularity.

The present invention has been made under such circumstances, and it is an object of at least the preferred embodiments of the present invention to provide a device for detecting the quantity of remaining fuel in a vehicle fuel tank which can accurately detect the remaining fuel quantity while increasing the degree of freedom in designing the shape of the fuel tank by compensating for a region where remaining fuel quantity cannot be detected by a float-type fuel quantity sensor with thermistors, and which can, at the same time, prevent the occurrence of irregularity in a detected value of the remaining fuel quantity even immediately after an ignition switch is turned on.

According to a first aspect of the invention, there is provided a device for detecting the quantity of remaining fuel in a vehicle fuel tank, including a float-type fuel quantity sensor and thermistors for detecting a liquid surface level in regions outside a range of motion of the float of the float-type fuel quantity sensor arranged inside the fuel tank, wherein

the first thermistor is arranged higher than an upper limit of the range of motion of the float of the float-type fuel quantity sensor, and the second thermistor is arranged lower than a lower limit of the range of motion of the float of the float-type fuel quantity sensor, and further including
an arithmetic operation means which calculates a quantity of fuel remaining in the fuel tank based on liquid surface levels which are detected by the float-type fuel quantity sensor, the first thermistor and the second thermistor, wherein said arithmetic operation means calculates the remaining fuel quantity based on the liquid surface level detected by the float-type fuel quantity sensor immediately after an ignition switch is turned on.

Because of the arrangement of the thermistors, it is possible to detect not only a filled-up status of the fuel tank but also a fuel status where the remaining fuel quantity is small by compensating for regions where the remaining fuel quantity cannot be detected by the float-type fuel quantity sensor using the first and second thermistors. Hence, it is possible to accurately detect the remaining fuel quantity while increasing the degree of freedom in designing the shape of the fuel tank. Further, when the thermistor detection value obtained immediately after the ignition switch is turned on is unstable, the detection of the remaining fuel quantity using the thermistors is not performed, and the remaining fuel quantity is detected based on the liquid surface level detected by the float-type fuel quantity sensor, and hence, it is possible to suppress irregularity in the detection of the remaining fuel quantity.

Preferably, the arithmetic operation means regards detection values of the first and second thermistors as normal detection values after a predetermined time has elapsed from when the ignition switch assumed an ON state, and calculates the remaining fuel quantity based on the liquid surface levels detected by the float-type fuel quantity sensor, the first thermistor and the second thermistor after the predetermined time has elapsed from when the ignition switch assumed an ON state.

Accordingly, after the predetermined time has elapsed from the point in time when the ignition switch assumed an ON state, that is, after the detection values of the first thermistor and the second thermistor become stable, the arithmetic operation means calculates the remaining fuel quantity based on the liquid surface levels detected by the float-type fuel quantity sensor, the first thermistor and the second thermistor. Thus, it is possible to accurately detect the remaining fuel quantity by suppressing irregularities in the detection value of the remaining fuel quantity.

In a further preferred form, a remaining quantity meter which displays the remaining fuel quantity based on a result of calculation of the arithmetic operation means includes an indicator which is operated corresponding to the result of calculation; and a time for the indicator to move from a lower limit value to an upper limit value of the indicator is set to the predetermined time or more.

Accordingly, the time for the indicator to move from a lower limit value to an upper limit value of the indicator is set to be equal to or greater than the predetermined time, that is, the period of time from when the ignition switch assumes an ON state to when the detection values of the first thermistor and the second thermistor are determined as normal detection values. Accordingly, if the liquid surface level in the fuel tank is above the uppermost liquid surface level detectable by the float-type fuel quantity sensor immediately after the ignition switch is turned on, it is possible to continuously move the indicator until the normal detection value is obtained by the first thermistor. In this manner, by moving the indicator until the accurate remaining fuel quantity is acquired based on the normal detection value by the first thermistor, a discomfort in operation (which could arise from unusual motion of the indicator) can be eliminated.

Preferably, the remaining fuel quantity detection device includes a memory means which stores the remaining fuel quantity at a point in time when the ignition switch was turned off the previous time, and when the float of the float-type fuel quantity sensor is at the lower limit of its range of motion immediately after the ignition switch is turned on, the arithmetic operation means takes the remaining fuel quantity stored in the memory means as the remaining fuel quantity.

Accordingly, when the actual remaining fuel quantity is less than a remaining fuel quantity corresponding to the lower limit position of the range of motion of the float, it is possible to prevent the calculated remaining fuel quantity from being larger than the actual remaining fuel quantity.

Preferably, the device further includes fuel injection control means which control fuel injection from fuel injection valves supplied with fuel from the fuel tank, and the arithmetic operation means calculates the remaining fuel quantity when this is between a first liquid surface level detected by the first thermistor and a second liquid surface level at the upper limit of the range of motion of the float-type fuel quantity sensor, or when this is between a third liquid surface level at the lower limit of the range of motion of the float-type fuel quantity sensor and a fourth liquid surface level detected by the second thermistor, based on the quantity of fuel injected as controlled by the fuel injection control means. Accordingly, when the remaining fuel quantity is between the thermistors and the float-type fuel quantity sensor, and so cannot be measured directly, it can be calculated.

Preferably, the fuel tank includes a main tank which has a downwardly indented recessed portion on an upper surface thereof, and a sub tank which has a smaller capacity than the main tank, is formed as a separate body from the main tank and is connected to a lower portion of the main tank, and the first thermistor and the float-type fuel quantity sensor are arranged in the main tank, with the float-type fuel quantity sensor being disposed below the recessed portion, and the second thermistor is arranged in the sub tank. With this arrangement, it is possible to provide a large range of motion of the float of the float-type fuel quantity sensor.

Preferably, the inside of the fuel tank is divided into a plurality of zones corresponding to respective ranges of remaining fuel quantity, including a first zone disposed above a first liquid surface level detected by the first thermistor and a second zone disposed between a second liquid surface level at the upper limit of the range of motion of the float-type fuel quantity sensor and the first liquid surface level, and the arithmetic operation means determines which one of the plurality of zones the remaining fuel quantity is in based on a liquid surface level detected by the float-type fuel quantity sensor and liquid surface levels detected by the first and second thermistors after a predetermined time has elapsed from when the ignition switch assumed an ON state.

After the predetermined time has elapsed from when the ignition switch assumed an ON state, based on the detection value of the float-type fuel quantity sensor and the detection values of the first and second thermistors, the arithmetic operation means selects one of the plurality of zones in the fuel tank including the first zone which is disposed above the first liquid surface level detected by the first thermistor and the second zone which is disposed between the first liquid surface level and the second liquid surface level which is the upper limit detected by the float-type fuel quantity sensor. Accordingly, it is possible to speedily calculate the remaining fuel quantity by determining the zone in which the liquid surface of the remaining fuel is positioned.

In a preferred form, the arithmetic operation means sets a reference remaining fuel quantity, which becomes the reference for calculation of the remaining fuel quantity, based on the zone which the fuel quantity is currently in and the zone which the fuel quantity was in after a predetermined time elapsed from when the ignition switch assumed an ON state, and calculates the remaining fuel quantity based on the reference remaining fuel quantity and fuel consumption with time. Accordingly, it is possible to speedily calculate the remaining fuel quantity which changes corresponding to the fuel consumption.

In an alternative preferred form, the arithmetic operation means sets a reference remaining fuel quantity, which becomes the reference for calculation of the remaining fuel quantity, based on the zone which the fuel quantity is currently in, the zone which the fuel quantity was in after a predetermined time elapsed from when the ignition switch assumed an ON state, and the zone which the fuel quantity was in when the ignition switch was turned off the previous time, and calculates the remaining fuel quantity based on the reference remaining fuel quantity and fuel consumption with time. Accordingly, it is possible to speedily calculate the remaining fuel quantity by also taking the change of the fuel consumption from when the ignition switch was turned off the previous time into consideration.

Preferably, when the present zone is the second zone, the arithmetic operation means determines in a first determination whether or not the zone which the fuel quantity was in when the predetermined time elapsed from when the ignition switch assumed an ON state was the first zone, and sets the reference remaining fuel quantity to a value corresponding to the first liquid surface level if it is determined in the first determination that the zone which the fuel quantity was in when the predetermined time elapsed from when the ignition switch assumed an ON state was the first zone. Accordingly, it is possible to accurately calculate the remaining fuel quantity when the remaining fuel quantity moves to the second zone from the first zone during travelling of a vehicle.

Preferably, when the present zone is the second zone, the arithmetic operation means determines in a first determination whether or not the zone which the fuel quantity was in when the predetermined time elapsed from when the ignition switch assumed an ON state was the first zone, and if it is determined in the first determination that the zone which the fuel quantity was in when the predetermined time elapsed from when the ignition switch assumed an ON state was a zone other than the first zone, the arithmetic operation means sets the reference remaining fuel quantity to a value corresponding to the first liquid surface level if the fuel quantity was in the first zone when the ignition switch was turned off the previous time. Thus, it is possible to accurately calculate the remaining fuel quantity when the remaining fuel quantity is in the vicinity of a boundary between the first and second zones.

In a further preferred form, the device further includes a memory means which stores the remaining fuel quantity at the point in time when the ignition switch was turned off the previous time, and if it is determined in the first determination that the zone which the fuel quantity was in when the predetermined time elapsed from when the ignition switch assumed an ON state was a zone other than the first zone, the arithmetic operation means determines the zone which the remaining fuel quantity was in when the ignition switch was turned off the previous time, and sets the reference remaining fuel quantity to the value of the remaining fuel quantity stored in the memory means if it is determined that the remaining fuel quantity was in the second zone when the ignition switch was turned off the previous time. Thus, it is possible to calculate the remaining fuel quantity with accuracy when the remaining fuel quantity is not changed from the second zone.

In a further preferred form, if the arithmetic operation means determines that the remaining fuel quantity when the ignition switch was turned off the previous time was in a zone other than the first zone and the second zone, it sets the reference remaining fuel quantity to a value corresponding to the second liquid surface level. Accordingly, it is possible to accurately calculate the remaining fuel quantity when the fuel is supplied from a state where the remaining fuel quantity is small.

Preferably, the arithmetic operation means sets the remaining fuel quantity to "0" when the determination of the zone is not possible. Thus, the remaining fuel quantity is set to "0" when the determination of the zone is not possible and there exists a possibility of the occurrence of trouble, and accordingly, a driver of a vehicle can easily recognize an abnormal state.

A preferred embodiment will now be described by way of example only, and with reference to the accompanying drawings, in which:
Fig. 1 is a side view of a part of a motorcycle;
Fig. 2 is a view showing the arrangement of the fuel tank and also the arrangement of a float-type fuel quantity sensor and first and second thermistors in the inside of the fuel tank;
Fig. 3 is a block diagram showing the means for calculating and displaying remaining fuel;
Fig. 4 is a front view of a meter unit;
Fig. 5 is a flow chart showing steps of processing immediately after an ignition switch is turned on;
Fig. 6 is a flow chart showing steps of determining the zone in which a liquid surface level in the fuel tank falls;
Fig. 7 is a flow chart showing steps of remaining fuel quantity calculation processing when the liquid surface level in the fuel tank falls in the second zone;
Fig. 8 is a flow chart showing steps of remaining fuel quantity calculation processing when the liquid surface level in the fuel tank falls in the fourth zone; and
Fig. 9 is a flow chart showing steps of remaining fuel quantity calculation processing when the liquid surface level in the fuel tank falls in the fifth zone.

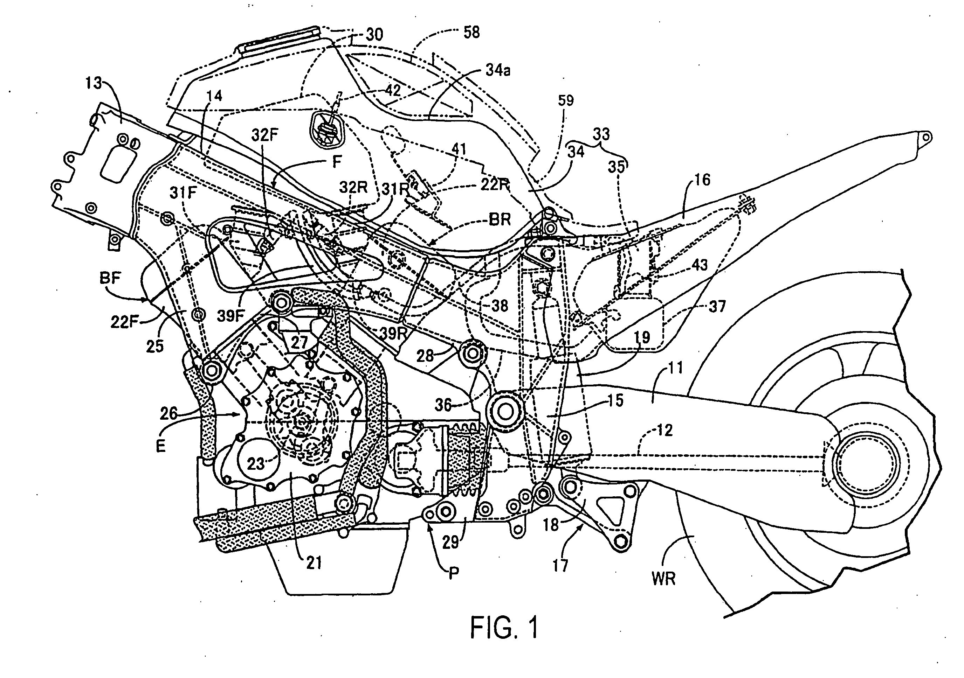

Hereinafter, an embodiment of the present invention is explained in detail in conjunction with the attached drawings (Fig. 1 to Fig. 9).

Firstly, in Fig. 1, a power unit P having a 4-cylinder V-type water-cooled engine E, for example, is mounted on a vehicle body frame F of a motorcycle. An output of the power unit P is transmitted to a rear wheel WR pivotally supported on a rear portion of a swing arm 11 which is supported on the vehicle body frame F in a vertically swingable manner, by way of a drive shaft 12 which extends longitudinally.

The vehicle body frame F includes a head pipe 13, a pair of left and right main frames 14 which extend rearwardly and downwardly from the head pipe 13, a pair of left and right pivot plates 15 which are contiguously connected to rear ends of the main frames 14 and extend downwardly, and a pair of left and right seat rails 16 which have front end portions thereof connected to upper portions of the pivot plates 15 and extend rearward and upward. A front end portion of the swing arm 11 is supported on the pivot plates 15 in a swingable manner. Further, a link mechanism 17 is provided between a lower portion of the pivot plates 15 and a front portion of the swing arm 11, and a rear cushion unit 19 is provided between a link member 18 which constitutes a portion of the link mechanism 17 and the vehicle body frame F.

Engine hangers 25 which extend downward from intermediate portions of the main frames 14 are integrally mounted on the main frames 14, and an engine body 20 of the engine E is mounted on the engine hangers 25 and the pivot plates 15 in a suspended manner. That is, first and second engine support portions 26, 27 are integrally mounted on the lowermost portions of the engine hangers 25 and rear upper portions of the engine hangers 15. Third and fourth engine support portions 28, 29 are integrally mounted on upper portions and lower portions of the pivot plates 15, and the engine body 20 is supported on the engine support portions 26, 27, 28 and 29.

The engine body 20 of the engine E adopts the V-shaped water-cooled structure which is constituted of a front bank BF positioned on a front side in a state where the engine E is mounted on the motorcycle, and a rear bank BR positioned behind the front bank BF in a state where the engine E is mounted on the motorcycle. A crankshaft 23 which has an axis extending in the lateral direction of the motorcycle is rotatably supported on a crankcase 21 shared in common by both banks BF, BR.

An air cleaner 30 is fixedly arranged between an upper portion of the front bank BF and an upper portion of the rear bank BR of the engine body 20. A rear side wall of a cylinder head 22F in the front bank BF is connected to the air cleaner 30 by way of throttle bodies 31 F, and a front side wall of a cylinder head 22R in the rear bank BR is connected to the air cleaner 30 by way of throttle bodies 31 R. Fuel injection valves 32F, 32R are attached to the respective throttle bodies 31 F, 31 R respectively.

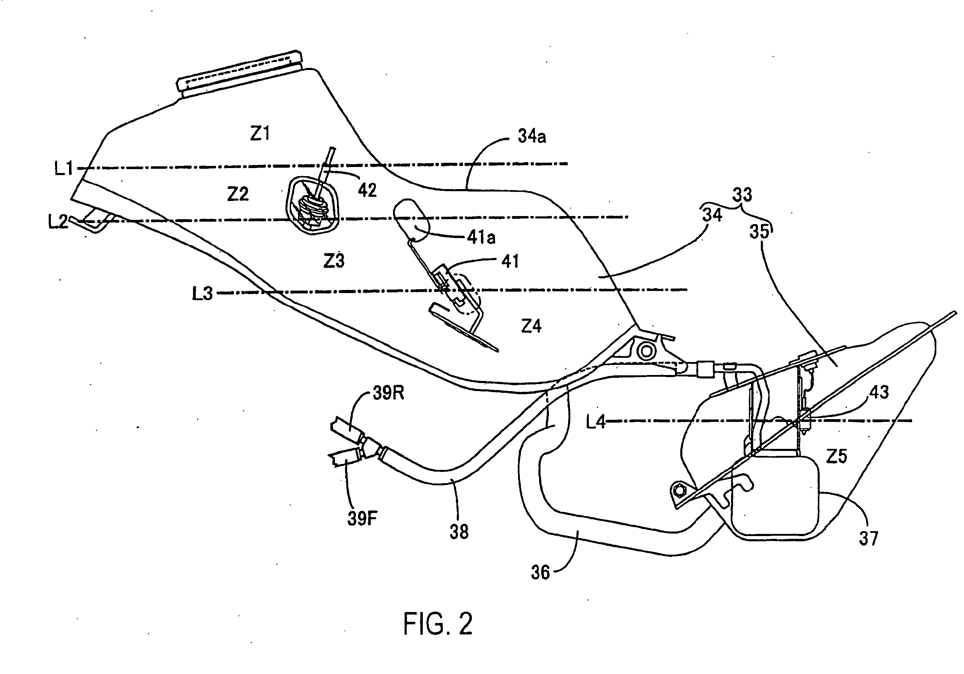

As shown more clearly in Figure 2, a fuel tank 33 is mounted on the vehicle body frame F. The fuel tank 33 is formed from a main tank 34 which is supported on the main frames 14 so as to cover the air cleaner 30 from above, and a sub tank 35 which has a smaller capacity than the main tank 34 and is formed as a body separate from the main tank 34. The sub tank 35 is arranged below the main tank 34, and a lower portion of the sub tank 35 is connected to a lower portion of the main tank 34 by way of a connection hose 36. Further, a recessed portion 34a which is indented downward is formed on an upper surface of the main tank 34. As shown in Fig. 1, for example, an air bag 58 is accommodated or arranged in the recessed portion 34a, and the main tank 34 and the air bag 58 are covered with the tank cover 59.

A pump unit 37 is accommodated in the inside of the sub tank 35. A supply hose 38 which is communicably connected with the pump unit 37 is connected to two branched hoses 39F, 39R, and both branched hoses 39F, 39R are connected to the fuel injection valves 32F, 32R which are attached to the throttle bodies 31 F, 31 R. That is, fuel discharged from the fuel tank 33 is supplied to the fuel injection valves 32F, 32R from the pump unit 37.

To detect the quantity of fuel remaining in the fuel tank 33, a float-type fuel quantity sensor 41, a first thermistor 42 and a second thermistor 43 are arranged in the inside of the fuel tank 33. The float-type fuel quantity sensor 41 is arranged in the inside of the main tank 34 below the recessed portion 34a. The first thermistor 42 is arranged in the inside of the main tank 34 so that it is higher than the upper limit position of the range of motion of the float of the float-type fuel quantity sensor 41. The second thermistor 43 is arranged in the inside of the sub tank 35 so that it is lower than the lower limit position of the range of motion of the float of the float-type fuel quantity sensor 41.

Here, the first thermistor 42 and the second thermistor 43 change electric resistance values thereof respectively depending on ambient temperature, so that each thermistor can detect a liquid surface level based on a change of the electric resistance value brought about by a change of ambient temperature between a case where the thermistor is below the liquid surface level and a case where the thermistor projects upward from the liquid surface level. The first thermistor 42 detects a first liquid surface level L1 above an upper limit position of the range of motion of the float of the float-type fuel quantity sensor 41.

Further, the float-type fuel quantity sensor 41 changes an electric resistance value R thereof depending on the upward or downward movement of a float 41 a thereof. The electric resistance value RU of the float-type fuel quantity sensor 41 when the float 41 a is at its upper limit position is set to 6 Ω, for example, while the electric resistance value RD of the float-type fuel quantity sensor 41 when the float 41a is at its lower limit position is set to 213 Ω, for example. The higher the electric resistance value R of the float-type fuel quantity sensor 41, the lower the liquid surface level is positioned. It is possible to detect the liquid surface level if that surface level is within the range of motion of the float 41 a by detecting the electric resistance value R between RU and RD. Accordingly, if the liquid surface level is between a second liquid surface level L2, which corresponds to the upper limit position of the range of motion of the float, and a third liquid surface level L3, which corresponds to the lower limit position of the range of motion of the float, this surface level can be detected by the float-type fuel quantity sensor 41.

Further, a fourth liquid surface level L4 below the lower limit value of the range of motion of the float of the float-type fuel quantity sensor 41, that is, below the third liquid surface level L3, is detected by the second thermistor 43.

In the inside of the fuel tank 33, a plurality of zones Z1 to Z5 are established by zoning corresponding to respective ranges of remaining fuel quantity. In this embodiment 1, as shown in Fig. 2, in the inside of the fuel tank 33, the zones are defined as follows: a first zone Z1 above the first liquid surface level L1 which is detected by the first thermistor 42; a second zone Z2 ranging from the first liquid surface level L1 to the second liquid surface level L2 which is an upper-limit liquid surface level detected by the float-type fuel quantity sensor 41; a third zone Z3 corresponding to the movable range of the float 41 a of the float-type fuel quantity sensor 41, that is, the third zone Z3 ranging from the second liquid surface level L2 to the third liquid surface level L3 which is a lower-limit liquid surface level detected by the float-type fuel quantity sensor 41; a fourth zone Z4 ranging from the third liquid surface level L3 to the fourth liquid surface level L4 detected by the second thermistor 43; and a fifth zone Z5 which is below the fourth liquid surface level L4.

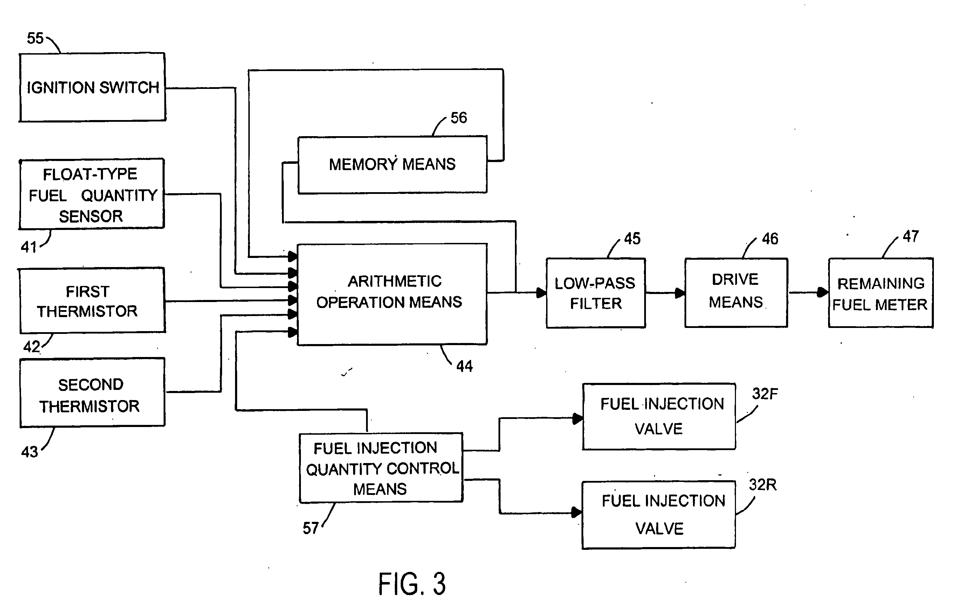

As shown in Fig. 3, the arithmetic operation means 44 calculates the remaining fuel quantity in the fuel tank 33 based on detection values of the float-type fuel quantity sensor 41, the first thermistor 42 and the second thermistor 43. The remaining fuel quantity calculated by the arithmetic operation means 44 is inputted to a drive means 46 via a low-pass filter 45, and a remaining fuel meter 47 is driven by the drive means 46.

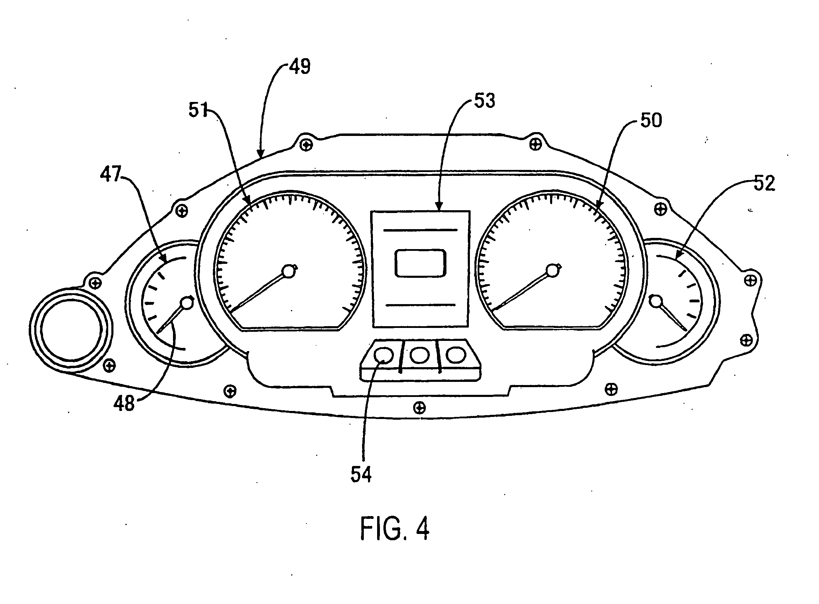

As shown in Fig. 4, a meter unit 49 which is mounted on a front portion of the motorcycle includes, for example, a speedometer 50, a tachometer 51 arranged to the left of the speedometer 50, the remaining fuel meter 47 arranged to the left of the tachometer 51, a water temperature meter 52 arranged to the right of the speedometer 50, and a digital display part 53 arranged between the speedometer 50 and the tachometer 51. An indicator 48 provided on the remaining quantity meter 47 indicates a lower limit value of the remaining fuel quantity when the ignition switch 55 is turned off, and is driven by the drive means 46 toward the upper limit value of the remaining fuel quantity for indicating the fuel quantity remaining in response to turning on of the ignition switch 55.

The above-mentioned digital display part 53 can change over its display every time a switch knob 54 mounted on the meter unit 49 is pushed for less than 2 seconds, for example. For example, "remaining distance", "remaining fuel quantity", "interval fuel consumption", "cumulative fuel consumption" and "not displayed" are sequentially changed over and are displayed on the digital display part 53 in response to the remaining fuel quantity in the fuel tank 33. However, when the liquid surface level in the fuel tank 33 is in the first zone Z1 and the remaining fuel quantity is in a filled-up state, for example, 24 litres, "interval fuel consumption", "cumulative fuel consumption" and "not displayed" can be changed over by the switch knob 54. When the liquid surface level in the fuel tank 33 is in the second to the fourth zones Z2 to Z4, and thus the remaining fuel quantity is less than 24 litres and equal to or more than 5 litres, for example, "remaining distance", "remaining fuel quantity", "interval fuel consumption", "cumulative fuel consumption" and "not displayed" can be changed over by the switch knob 54. Further, as soon as the liquid surface level in the fuel tank 33 enters the fifth zone Z5, that is, when the remaining fuel quantity becomes less than 5 litres, for example, the digital display part 53 automatically displays "remaining distance" unless "not displayed" is selected by the switch knob 54.

Returning to Fig. 3, a signal from the ignition switch 55 is also inputted to the arithmetic operation means 44, in addition to the detection values of the float-type fuel quantity sensor 41, the first thermistor 42 and the second thermistor 43. When the ignition switch 55 is turned on after having previously being turned off (in other words, when the vehicle is restarted), the digital display part 53 maintains the display mode of the previous time, and displays "interval fuel consumption" when the display mode of the previous time cannot be maintained.

Further, the remaining fuel quantity which was calculated by the arithmetic operation means 44 at the point in time when the ignition switch 55 was turned off the previous time is stored in the memory means 56, and this remaining fuel quantity stored in the memory means 56 is inputted to the arithmetic operation means 44. Further, the fuel injection quantity from the fuel injection valves 32F, 32R are controlled by the fuel injection quantity control means 57, and one pulse signal is inputted to the arithmetic operation means 44 every time that the fuel quantity which has passed through the fuel injection valves 32F, 32R becomes a predetermined quantity, for example 10 cc (10 ml). That is, a signal indicative of fuel consumption with time from the fuel injection quantity control means 57 is inputted to the arithmetic operation means 44.

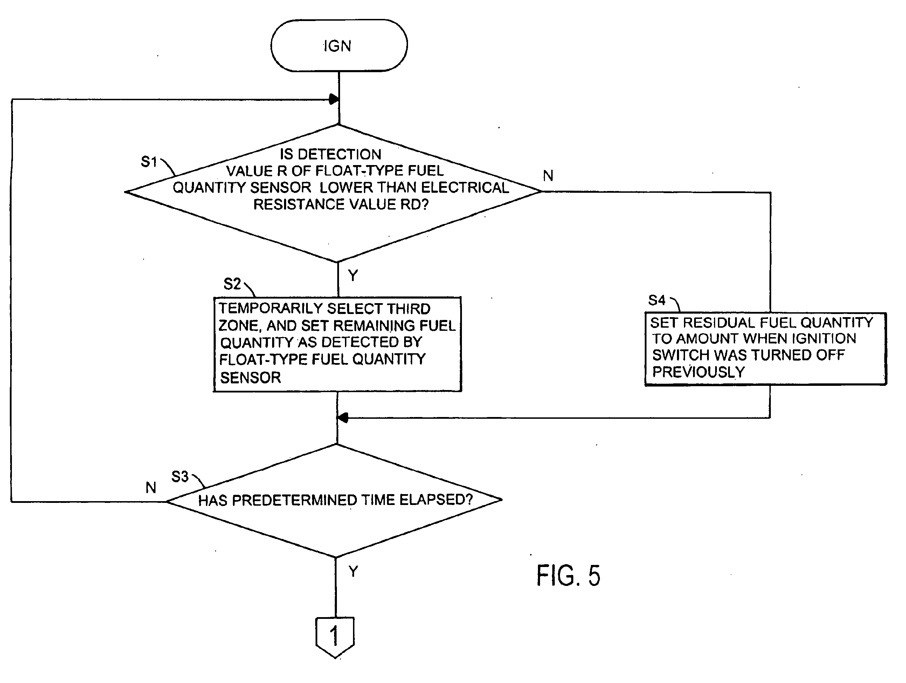

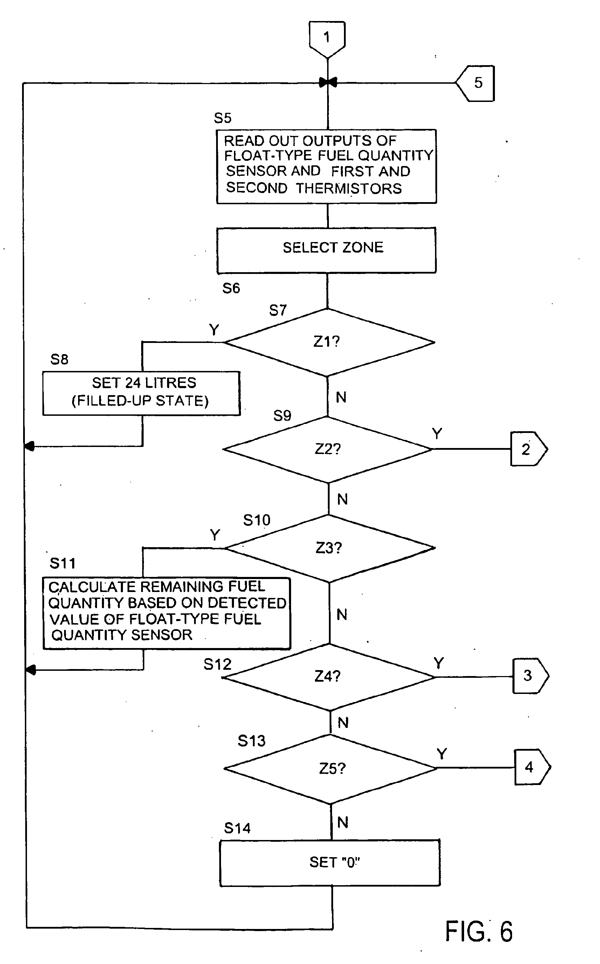

Immediately after the ignition switch 55 is turned on, the arithmetic operation means 44 executes processing which follows the steps shown in Fig. 5. In step S1, the arithmetic operation means 44 determines whether or not a detected electric resistance value R of the float-type fuel quantity sensor 41 is lower than an electric resistance value RD corresponding to the lower limit position of the float 41a, that is, in a state where the liquid surface of the fuel in the fuel tank 33 is in any one of the first to third zones Z1 to Z3. When the arithmetic operation means 44 determines that R < RD, the processing advances to step S2. In this step S2, the arithmetic operation means 44 temporarily selects the third zone Z3, and sets the remaining fuel quantity to an amount corresponding to the liquid surface level detected by the float-type fuel quantity sensor 41. In next step S3, the arithmetic operation means 44 determines whether or not a predetermined time has elapsed after the ignition switch 55 is turned on. When the arithmetic operation means 44 determines that the predetermined time has elapsed, the processing advances to step S5 shown in Fig. 6. Further, when the arithmetic operation means 44 determines RD ≤ R in step S1, that is, when the arithmetic operation means 44 determines that the liquid surface of the fuel remaining in the fuel tank 33 is in either the fourth zone Z4 or the fifth zone Z5 by detecting that the float of the float-type fuel quantity sensor 41 is at the lower limit position of its range of motion, the processing advances to step S4 from step S1. In step S4, the remaining fuel quantity is set to an amount corresponding to the value of the remaining fuel quantity stored in the memory means 56 (that is, the remaining fuel quantity at the point in time when the ignition switch 55 was turned off the previous time).

The arithmetic operation means 44 detects the detection values of the first and second thermistors 42, 43 and treats them as normal values after the said predetermined time, for example, 60 seconds, has elapsed from a point in time when the ignition switch 55 assumed an ON state. Processing indicated shown in Fig. 5 is repeated until the predetermined time has elapsed.

After the predetermined time has elapsed from the point in time when the ignition switch 55 assumed an ON state, the remaining fuel quantity is calculated based on liquid surface levels detected by the float-type fuel quantity sensor 41, the first thermistor 42 and the second thermistor 43.

Further, assume a case where the length of time for the indicator 48 of the remaining fuel meter 47 to be moved from a lower limit value to an upper limit value is set to the above-mentioned predetermined time or more by the above-mentioned low-pass filter 45, and the actual liquid surface level falls in either one of the first zone Z1 and the second zone Z2 immediately after the ignition switch 55 is turned on. In such a case, even when the remaining fuel quantity is set to an amount based on the liquid surface level detected by the float-type fuel quantity sensor 41 in step S2, the actual remaining fuel quantity is determined before the above-mentioned indicator 48 stops, so that the indicator 48 is continuously driven to indicate the actual remaining fuel quantity and there is no possibility that a rider will feel discomfort (as could result, for example from a sudden motion of the indicator 48).

Further, after the predetermined time has elapsed from the point in time when the ignition switch 55 assumed an ON state, the arithmetic operation means 44 determines into which zone the liquid surface level falls out of the first to fifth zones Z1, Z2, Z3, Z4 and Z5 in the fuel tank 33 in accordance with the steps shown in Fig. 6. In step S5 shown in Fig. 6, outputs of the float-type fuel quantity sensor 41 and the first and second thermistors 42, 43 are read out. In step S6, one of the first to fifth zones Z1 to Z5 is selected based on the liquid surface level detected by the float-type fuel quantity sensor 41 and the liquid surface levels detected by the first and second thermistors 42, 43.

When the first zone Z1 is selected in step S6, the processing advances to step S8 through step S7 and the arithmetic operation means 44 determines that the remaining fuel quantity is in a filled-up state. When the third zone Z3 is selected, the processing advances to step S11 through steps S7, S9 and S10, and the arithmetic operation means 44 calculates a remaining fuel quantity based on the liquid surface level detected by the float-type fuel quantity sensor 41. When the arithmetic operation means 44 determines that the liquid surface level falls in none of zones Z1 to Z5 (that is, when the zone selection cannot be carried out, possibly because of problems in the arithmetic operation unit), the processing advances to step S14 through steps S7, S9, S10, S12 and S13, and "0" is set as the remaining fuel quantity, to alert the rider that something is amiss.

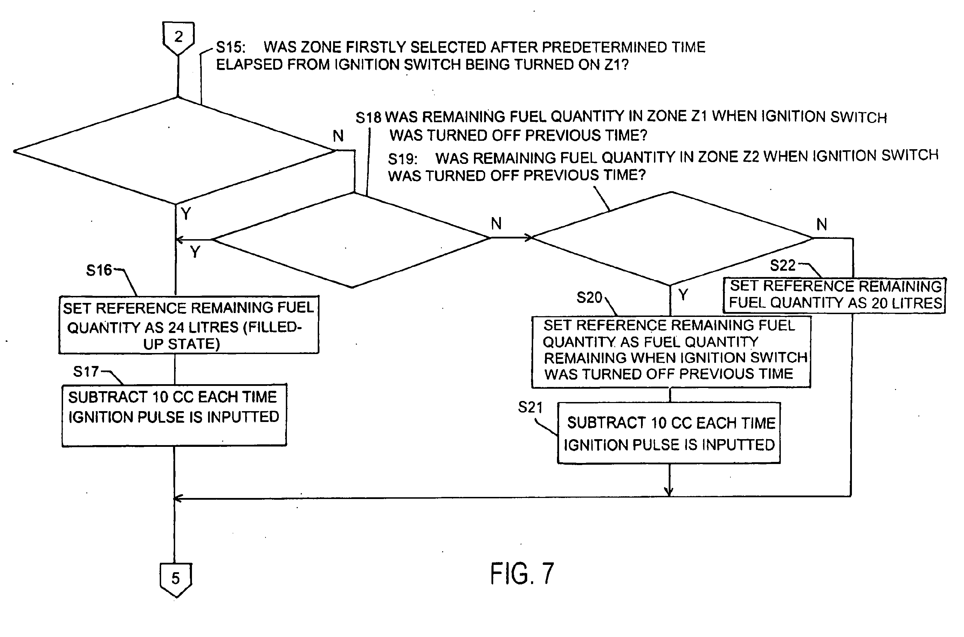

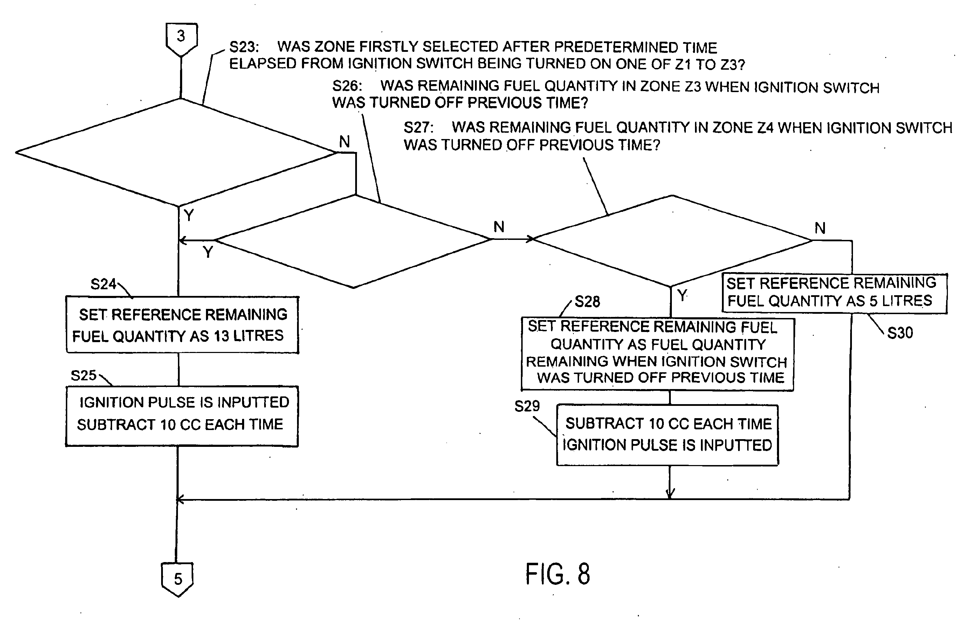

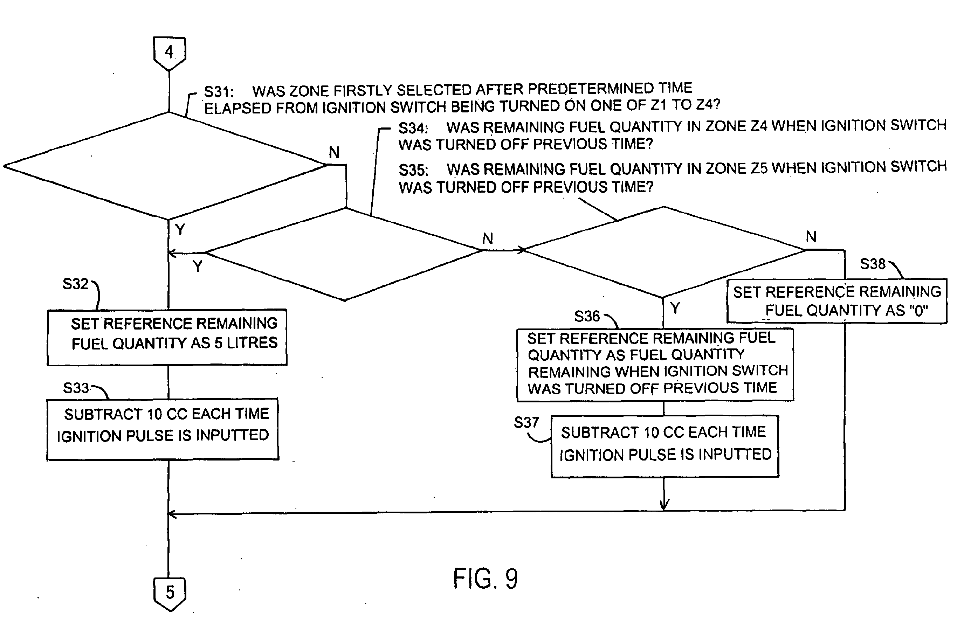

Further, when the second zone Z2 is selected in step S6, the processing advances to step S15 shown in Fig. 7 through steps S7 and S9. When the fourth zone Z4 is selected in step S6, the processing advances to step S23 shown in Fig. 8 through steps S7, S9, S10 and S12. When the fifth zone Z5 is selected, the processing advances to step S31 shown in Fig. 9 through steps S7, S9, S10, S12 and S13.

With regard to Figure 7, when the arithmetic operation means 44 determines that the present zone is the second zone Z2, the arithmetic operation means 44 then performs a determination in step S15 as to whether or not the zone which was firstly selected after the predetermined time elapsed from when the ignition switch 55 was turned on was the first zone Z1. If the zone which was firstly selected after the predetermined time elapsed from when the ignition switch 55 was turned on was the first zone Z1, then the processing advances to step S16, and the arithmetic operation means 44 sets the reference remaining fuel quantity (which is a reference value for calculation of the remaining fuel quantity in the second zone Z2) to be 24 litres (filled-up state), a value corresponding to the first liquid surface level L1. Thereafter, in step S17, the arithmetic operation means 44 subtracts a predetermined quantity, for example 10 cc (10 ml), each time a pulse signal is outputted from the fuel injection quantity control means 57. Then, the processing returns to step S5 in Fig. 6. In step S17, the remaining fuel quantity is calculated based on the reference remaining fuel quantity and fuel consumption with time.

If the zone which was firstly selected after the predetermined time elapsed from when the ignition switch 55 was turned on was not the first zone Z1, then the arithmetic operation means 44 determines in step S18 whether or not the remaining fuel quantity when the ignition switch 55 was turned off the previous time was in the first zone Z1. When the arithmetic operation means 44 determines that the remaining fuel quantity when the ignition switch 55 was turned off the previous time was in the first zone Z1, the processing advances to step S16.

That is, when the liquid surface level in the fuel tank 33 moves from the first zone Z1 to the second zone Z2 during travelling of a motorcycle, the arithmetic operation means 44 executes arithmetic operation in steps S15 to S17, while when the liquid surface level in the fuel tank 33 is in the vicinity of a boundary between the first zone Z1 and the second zone Z2, the arithmetic operation means 44 executes arithmetic operation in steps S15, S18, S16 and S17 sequentially.

If the arithmetic operation means 44 determines in step S15 that the zone which was firstly selected after the predetermined time elapsed from when the ignition switch 55 was turned on was not the first zone Z1, and also determines in step S18 that the remaining fuel quantity when the ignition switch 55 was turned off the previous time was not in the first zone Z1, the arithmetic operation means 44 then determines in step S19 whether or not the remaining fuel quantity when the ignition switch 55 was turned off the previous time was in the second zone Z2. When the arithmetic operation means 44 determines that the fuel quantity when the ignition switch 55 was turned off the previous time was in the second zone Z2, the processing advances to step S20 from step S19.

In step S20, the arithmetic operation means 44 sets the fuel quantity stored in the memory means 56 (that is, the remaining fuel quantity when the ignition switch 55 was turned off the previous time) as the reference remaining fuel quantity (the reference value for calculation of remaining fuel quantity in the second zone Z2). In the next step S21, the arithmetic operation means 44 subtracts a predetermined quantity, for example 10 cc (10 ml), each time a pulse signal is outputted from the fuel injection quantity control means 57. Then, the processing returns to step S5.

Further, if the arithmetic operation means 44 determines that the remaining fuel quantity when the ignition switch 55 was turned off the previous time was not in the second zone Z2, the processing advances to step S22 from step S19. Here, the arithmetic operation means 44 sets a value corresponding to the second liquid surface level L2, for example, 20 litres, as the reference remaining fuel quantity (the reference value for calculation of the remaining fuel quantity in the second zone Z2), and the processing returns to step S5.

That is, when the liquid surface level in the fuel tank 33 has not changed, the arithmetic operation means 44 executes arithmetic operations in steps S15, S18 and S19 to S21. When the quantity of fuel in the fuel tank 33 has increased due to fuel supply, the arithmetic operation means 44 executes arithmetic operations in steps S15, S18, S19 and S22.

With regard to Figure 8, when the arithmetic operation means 44 determines that the present zone is the fourth zone Z4, the arithmetic operation means 44 then performs a determination in step S23 as to whether or not the zone which was firstly selected after the predetermined time elapsed from when the ignition switch 55 was turned on was any one of the first zone Z1, the second zone Z2 and the third zone Z3. If the zone which was firstly selected after the predetermined time elapsed from when the ignition switch 55 was turned on was any one of the first zone Z1, the second zone Z2 and the third zone Z3, the processing advances to step S24, and the arithmetic operation means 44 sets the reference remaining fuel quantity (which is a reference value for calculation of the remaining fuel quantity in the fourth zone Z4) to be 13 litres, a value corresponding to the third liquid surface level L3, for example, Thereafter, in step S25, the arithmetic operation means 44 subtracts a predetermined quantity, for example 10 cc (10 ml), each time a pulse signal is outputted from the fuel injection quantity control means 57. Then, the processing returns to step S5.

If the zone which was firstly selected after the predetermined time elapsed from when the ignition switch 55 was turned on was none of the first zone Z1 to the third zone Z3, then the arithmetic operation means 44 determines in step S26 whether or not the remaining fuel quantity when the ignition switch 55 was turned off the previous time was in the third zone Z3. When the arithmetic operation means 44 determines that the remaining fuel quantity when the ignition switch 55 was turned off the previous time was in the third zone Z3, the processing advances to step S24.

That is, when the liquid surface level in the fuel tank 33 moves from any one of the first to third zones Z1 to Z3 to the fourth zone Z4 during travelling of a motorcycle, the arithmetic operation means 44 executes arithmetic operation in steps S23 to S25, while when the liquid surface level in the fuel tank 33 is in the vicinity of a boundary between the third zone Z3 and the fourth zone Z4, the arithmetic operation means 44 executes arithmetic operation in steps S23, S26, S24 and S25 sequentially.

If the arithmetic operation means 44 determines in step S26 that the remaining fuel quantity when the ignition switch 55 was turned off the previous time was not in the third zone Z3, the arithmetic operation means 44 then determines in step S27 whether or not the remaining fuel quantity when the ignition switch 55 was turned off the previous time was in the fourth zone Z4. When the arithmetic operation means 44 determines that the remaining fuel quantity when the ignition switch 55 was turned off the previous time was in the fourth zone Z4, the processing advances to step S28 from step S27.

In step S28, the arithmetic operation means 44 sets the fuel quantity stored in the memory means 56 (that is, the remaining fuel quantity when the ignition switch 55 was turned off the previous time) as the reference remaining fuel quantity (the reference value for calculation of remaining fuel quantity in the fourth zone Z4). In the next step S29, the arithmetic operation means 44 subtracts a predetermined quantity, for example 10 cc (10 ml), each time a pulse signal is outputted from the fuel injection quantity control means 57. Then, the processing returns to step S5.

Further, if the arithmetic operation means 44 determines in step S27 that the remaining fuel quantity when the ignition switch 55 was turned off the previous time was not in the fourth zone Z4, the processing advances to step S30 from step S27. Here, the arithmetic operation means 44 sets a value corresponding to the fourth liquid surface level L4, for example, 5 litres, as the reference remaining fuel quantity (which becomes the reference value for calculation of the remaining fuel quantity in the fourth zone Z4), and the processing returns to step S5.

That is, when the liquid surface level in the fuel tank 33 is not changed, the arithmetic operation means 44 executes arithmetic operations in steps S23, S26 and S27 to S29. The arithmetic operation means 44 executes arithmetic operations in steps S23, S26, S27 and S30 if the remaining fuel quantity in the fuel tank 33 is increased due to the fuel supply from a state in the fifth zone Z5 or fuel is removed from a state in the first zone Z1 or the second zone Z2.

With regard to Figure 9, when the arithmetic operation means 44 determines that the present zone is the fifth zone Z5, the arithmetic operation means 44 then performs a determination in step S31 as to whether or not the zone which was firstly selected after the predetermined time elapsed from when the ignition switch 55 was turned on was any one of the first zone Z1, the second zone Z2, the third zone Z3 and the fourth zone Z4. When the zone which was firstly selected after the predetermined time elapsed from when the ignition switch 55 was turned on was any one of the first zone Z1, the second zone Z2, the third zone Z3 and the fourth zone Z4, the processing advances to step S32, and the arithmetic operation means 44 sets the reference remaining fuel quantity (which is a reference value for calculation of the remaining fuel quantity in the fifth zone Z5) to be 5 litres, a value corresponding to the fourth liquid surface level L4, for example. Thereafter, in step S33, the arithmetic operation means 44 subtracts a predetermined quantity, for example 10 cc (10 ml), each time a pulse signal is outputted from the fuel injection quantity control means 57. Then, the processing returns to step S5.

If the arithmetic operation means 44 determines in step S31 that the zone which was firstly selected after the predetermined time elapsed from when the ignition switch 55 was turned on was not one of the first zone Z1, the second zone Z2, the third zone Z3 and the fourth zone Z4, that is, when the arithmetic operation means 44 determines that the zone which was firstly selected after the predetermined time elapsed from when the ignition switch 55 was turned on was the fifth zone Z5, the arithmetic operation means 44 then determines in step S34 whether or not the remaining fuel quantity zone when the ignition switch 55 was turned off the previous time was in the fourth zone Z4. When the arithmetic operation means 44 determines that the remaining fuel quantity when the ignition switch 55 was turned off the previous time was in the fourth zone Z4, the processing advances to step S32.

That is, when the liquid surface level in the fuel tank 33 moves from any one of the first to fourth zones Z1 to Z4 to the fifth zone Z5 during travelling of a motorcycle, the arithmetic operation means 44 executes arithmetic operations in steps S31 to S33, while when the liquid surface level in the fuel tank 33 is in the vicinity of a boundary between the fourth zone Z4 and the fifth zone Z5, the arithmetic operation means 44 executes arithmetic operation in steps S31, S34, S32 and S33 sequentially.

If the arithmetic operation means 44 determines in step S34 that the remaining fuel quantity when the ignition switch 55 was turned off the previous time was not in the fourth zone Z4, the arithmetic operation means 44 then determines in step S35 whether or not the remaining fuel quantity when the ignition switch 55 was turned off the previous time was in the fifth zone Z5. If the arithmetic operation means 44 determines that the remaining fuel quantity when the ignition switch 55 was turned off the previous time was in the fifth zone Z5, the processing advances to step S36 from step S35.

In step S36, the arithmetic operation means 44 sets the remaining fuel quantity stored in the memory means 56 (that is, the remaining fuel quantity when the ignition switch 55 was turned off the previous time) as the reference remaining fuel quantity (the reference value for calculation of remaining fuel quantity in the fifth zone Z5). In the next step S37, the arithmetic operation means 44 subtracts a predetermined quantity, for example 10 cc (10 ml), each time a pulse signal is outputted from the fuel injection quantity control means 57. Then, the processing returns to step S5.

Further, if the arithmetic operation means 44 determines in step S35 that the remaining fuel quantity when the ignition switch 55 was turned off the previous time was not in the fifth zone Z5, the processing advances to step S38 from step S35. Here, the arithmetic operation means 44 sets the remaining fuel quantity to "0".

That is, when the liquid surface level in the fuel tank 33 is not changed, the arithmetic operation means 44 executes arithmetic operations in steps S31, S34 and S35 to S37. If none of the first zone Z1 to the fifth zone Z5 is determined, the arithmetic operation means 44 sets the remaining fuel quantity to "0".

As described above, in the remaining fuel quantity calculation executed by the arithmetic operation means 44 in the second zone Z2, the fourth zone Z4 and the fifth zone Z5, the reference remaining fuel quantity is set corresponding to the zone which was firstly selected after the predetermined time elapsed from when the ignition switch 55 was turned on and the zone when the ignition switch 55 was turned off previous time. To summarize the reference remaining fuel quantities in the second zone Z2, the fourth zone Z4 and the fifth zone Z5, they take values shown in Table 1.

| **Present zone** | **Zone firstly selected after predetermined time has elapsed from when ignition switch was turned on** | **Zone at point of time that ignition switch was turned off previous time** | **Reference remaining fuel quantity** |
|---|---|---|---|
| Z2 | Z1 | - | L1 (24 litres) |
| | Zone other than Z1 | Z1 | L1 (24 litres) |
| | | Z2 | Calculation value at the point of time that the ignition switch was turned off previous time |
| | | Zone other than Z1, Z2 | L2 (20 litres) |
| Z4 | Z1 to Z3 | - | L3 (13 litres) |
| | Zone other than Z1 | Z3 | L3 (13 litres) |
| | to Z3 | Z4 | Calculation value at the point of time that the ignition switch was turned off previous time |
| | | Zone other than Z3, Z4 | L4 (5 litres) |
| Z5 | Z1 to Z4 | - | L4 (5 litres) |
| | Zone other than Z1 | Z4 | L4 (5 litres) |
| | to Z4 | Z5 | Calculation value at the point of time that the ignition switch was turned off previous time |
| | | Zone other than Z4, Z5 | 0 litres |

Next, the manner of operation of the embodiment 1 will be explained. The first thermistor 42 is fixedly arranged above the upper limit position of the range of motion of the float of the float-type fuel quantity sensor 41, and the second thermistor 43 is fixedly arranged below the lower limit position of the range of motion of the float of the float-type fuel quantity sensor 41. Accordingly, it is possible to detect the filled-up position of the fuel tank 33 and the position at which the remaining fuel quantity is small by compensating for the regions which cannot be sensed by the float-type fuel quantity sensor 41 using the first and second thermistors 42, 43 and hence, the remaining fuel quantity can be accurately detected while increasing the degree of freedom in designing the shape of the fuel tank 33.

Further, the fuel tank 33 is constituted by the main tank 34 having a recessed portion 34a which is indented downwardly on the upper surface thereof and a sub tank 35 which is connected to the lower portion of the main tank 34. The first thermistor 42 and the float-type fuel quantity sensor 41 are arranged in the inside of the main tank 34, with the float-type fuel quantity sensor 41 disposed below the recessed portion 34a. The second thermistor 43 is arranged in the inside of the sub tank 35, and with such an arrangement, the float of the float-type fuel quantity sensor 41 can have a large range of motion.

The remaining fuel quantity is calculated based on the liquid surface level detected by the float-type fuel quantity sensor 41 immediately after the ignition switch 55 is turned on. As the thermistor detection value immediately after the ignition switch 55 is turned on is unstable, the detection of remaining fuel quantity using the first and second thermistors 42, 43 is not performed, and the remaining fuel quantity is detected based on the liquid surface level detected by the float-type fuel quantity sensor 41, so that irregularity in the detection of remaining fuel quantity can be suppressed.

Further, after a predetermined time has elapsed from the point in time when the ignition switch 55 assumed an ON state, the detection values of the first and second thermistors 42, 43 are set as normal detection values (as it is assumed that the detection values of the first and second thermistors 42, 43 have become stable), and the remaining fuel quantity is calculated based on the liquid surface levels detected by the float-type fuel quantity sensor 41, the first thermistor 42 and the second thermistor 43. Thus, the remaining fuel quantity can be detected accurately, and irregularity in the detected value of the remaining fuel quantity can be suppressed.

Further, the time for the indicator 48 of the remaining fuel quantity meter 47 which displays the remaining fuel quantity to move from the lower limit value to the upper limit value is set to be equal to or greater than the predetermined period of time from when the ignition switch 55 assumed an ON state to the point in time when the detection values of the first thermistor 42 and the second thermistor 43 are determined as the normal detection values. Accordingly, when the liquid surface level in the fuel tank 33 is above the uppermost liquid surface level detected by the float-type fuel quantity sensor 41 immediately after the ignition switch 55 is turned on, the indicator 48 moves continuously until the normal detection value by the first thermistor 42 is obtained, and hence, the indicator 48 is moved until the indicator 48 reaches the accurate remaining fuel quantity display based on the normal detection value by the first thermistor 42. Thus, the user feels no discomfort which could arise from unusual movement of the indicator 48.

Further, when the float of the float-type fuel quantity sensor 41 is at the lower limit position of its range immediately after the ignition switch 55 is turned on, the remaining fuel quantity when the ignition switch 55 was turned off the previous time is set as the remaining fuel quantity, and hence, when the actual remaining fuel quantity is smaller than the remaining fuel quantity corresponding to the lower limit position of the range of motion of the float, it is possible to prevent the calculated remaining fuel quantity from being larger than the actual remaining fuel quantity.

The arithmetic operation means 44 calculates the remaining fuel quantity when it falls between the first liquid surface level L1 detected by the first thermistor 42 and the upper limit of the range of motion of the float-type fuel quantity sensor 41 (that is, the second liquid surface level L2), and the remaining fuel quantity when it falls between the lower limit of the range of motion of the float-type fuel quantity sensor 41 (that is, the third liquid level L3) and the fourth liquid surface level L4 detected by the second thermistor 43, based on quantities of fuel injected from the fuel injection valves 32F, 32R, so that the remaining fuel quantity between two thermistors 42, 43 and the float-type fuel quantity sensor 41 can be calculated.

In the inside of the fuel tank 33, first to fifth zones Z1 to Z5 are defined for respective ranges of liquid surface of the remaining fuel. After the predetermined time has elapsed from when the ignition switch 55 assumed an ON state, the arithmetic operation means 44 selects one of the first to fifth zones Z1 to Z5 based on the liquid surface level detected by the float-type fuel quantity sensor 41 and the liquid surface levels detected by the first and second thermistors 42, 43. Accordingly, it is possible to speedily calculate the remaining fuel quantity by determining which zone the remaining fuel quantity is in.

Further, in the inside of the fuel tank 33, the first zone Z1 is defined as being above the first liquid surface level L1 detected by the first thermistor 42, and the second zone Z2 is defined as being between the first liquid surface level L1 and the second liquid surface level L2 detected by the float-type fuel quantity sensor 41. Accordingly, when the present zone is the second zone Z2 and the zone which was firstly selected after the predetermined time elapsed from when the ignition switch 55 was turned on is the first zone Z1, a value (for example, 24 litres) corresponding to the first liquid surface level is set as the reference remaining fuel quantity, which becomes the reference value for calculation of the remaining fuel quantity calculation in the second zone Z2. Hence, it is possible to accurately calculate the remaining fuel quantity when the remaining fuel quantity moves from the first zone Z1 to the second zone Z2 during travelling of the vehicle.

Further, when the present zone is the second zone Z2, and the zone which was firstly selected after the predetermined time elapsed from when the ignition switch 55 was turned on was a zone other than the first zone Z1, and it is determined that the remaining fuel quantity was in the first zone Z1 when the ignition switch 55 was turned off the previous time, a value (for example, 24 litres) corresponding to the first liquid surface level is set as the reference remaining fuel quantity, which becomes the reference value for calculation of the remaining fuel quantity in the second zone Z2. Accordingly, it is possible to accurately calculate the remaining fuel quantity when the remaining fuel quantity is in the vicinity of the boundary between the first and the second zones Z1, Z2.

Further, when the present zone is the second zone Z2, and the zone which was firstly selected after the predetermined time elapsed from when the ignition switch 55 was turned on was a zone other than the first zone Z1, and it is determined that the remaining fuel quantity was in the second zone Z2 when the ignition switch 55 was turned off the previous time, then the remaining fuel quantity when the ignition switch 55 was turned off the previous time is set as the reference remaining fuel quantity, which becomes the reference value for calculation of the remaining fuel quantity in the second zone Z2. Accordingly, it is possible to accurately calculate the remaining fuel quantity when the remaining fuel quantity is not changed from the value which the remaining fuel quantity takes in the second zone Z2.

Further, when the present zone is the second zone Z2, and the zone which was firstly selected after the predetermined time elapsed from when the ignition switch 55 was turned on was a zone other than the first zone Z1, and it is determined that the remaining fuel quantity was in neither of the first and second zones Z1, Z2 when the ignition switch 55 was turned off the previous time, a value (for example, 20 litres) corresponding to the second liquid surface level L2 (the upper limit liquid surface level detected by the float-type fuel quantity sensor 41) is set as the reference remaining fuel quantity which becomes the reference value for calculation of the remaining fuel quantity in the second zone Z2. Accordingly, it is possible to accurately calculate the remaining fuel quantity when the fuel is supplied from a state where the remaining fuel quantity is small.

Further, the remaining fuel quantity is set to "0" when the determination of the zone is impossible. Accordingly, when the determination of the zone is impossible (possibly because of a malfunction), the remaining fuel quantity is set to "0" thus allowing a rider of the motorcycle to easily recognize the occurrence of abnormality in the vehicle.

Although the explanation has been made with respect to the embodiment of the present invention heretofore, the present invention is not limited to the embodiment, and various design changes are conceivable without departing from the present invention as claimed.

## Claims

1. A device for detecting the quantity of remaining fuel in a vehicle fuel tank (33), including a float-type fuel quantity sensor (41) and thermistors (42, 43) for detecting a liquid surface level in regions outside the range of motion of the float of the float-type fuel quantity sensor (41) arranged inside the fuel tank (33), wherein
the first thermistor (42) is arranged higher than an upper limit of the range of motion of the float of the float-type fuel quantity sensor (41), and the second thermistor (43) is arranged lower than a lower limit of the range of motion of the float of the float-type fuel quantity sensor (41), and further including
an arithmetic operation means (44) configurated to calculate a quantity of fuel remaining in the fuel tank (33) based on liquid surface levels which are detected by the float-type fuel quantity sensor (41), the first thermistor (42) and the second thermistor (43), wherein said arithmetic operation means (44) is configurated to calculate the remaining fuel quantity based on the liquid surface level detected by the float-type fuel quantity sensor (41) immediately after it receives an on state signal from an ignition switch (55).

2. A device for detecting the quantity of remaining fuel in a vehicle fuel tank according to claim 1, wherein the arithmetic operation means (44) regards detection values of the first and second thermistors (42, 43) as normal detection values after a predetermined time has elapsed from when the ignition switch (55) assumed an ON state, and calculates the remaining fuel quantity based on the liquid surface levels detected by the float-type fuel quantity sensor (41), the first thermistor (42) and the second thermistor (43) after the predetermined time has elapsed from when the ignition switch (55) assumed an ON state.

3. A device for detecting the quantity of remaining fuel in a vehicle fuel tank according to claim 2, wherein a remaining quantity meter (47) which displays the remaining fuel quantity based on a result of calculation of the arithmetic operation means (44) includes an indicator (48) which is operated corresponding to the result of calculation, and a time for the indicator (48) to move from a lower limit value to an upper limit value of the indicator is set to the predetermined time or more.

4. A device for detecting the quantity of remaining fuel in a vehicle fuel tank according to any one of claims 1 to 3, wherein the remaining fuel quantity detection device includes a memory means (56) which stores the remaining fuel quantity at a point in time when the ignition switch (55) was turned off the previous time, and when the float of the float-type fuel quantity sensor (41) is at the lower limit of its range of motion immediately after the ignition switch (55) is turned on, the arithmetic operation means (44) takes the remaining fuel quantity stored in the memory means (56) as the remaining fuel quantity.

5. A device for detecting the quantity of remaining fuel in a vehicle fuel tank according to any one of claims 1 to 4, wherein the device further includes fuel injection control means (57) which control fuel injection from fuel injection valves (32F, 32R) supplied with fuel from the fuel tank (33), and the arithmetic operation means (44) calculates the remaining fuel quantity when this is between a first liquid surface level (L1) detected by the first thermistor (42) and a second liquid surface level (L2) at the upper limit of the range of motion of the float-type fuel quantity sensor (41), or when this is between a third liquid surface level (L3) at the lower limit of the range of motion of the float-type fuel quantity sensor (41) and a fourth liquid surface level (L4) detected by the second thermistor (43), based on the quantity of fuel injected as controlled by the fuel injection control means (57).

6. A device for detecting the quantity of remaining fuel in a vehicle fuel tank according to any one of claims 1 to 5, wherein the fuel tank (33) includes a main tank (34) which has a downwardly indented recessed portion (34a) on an upper surface thereof, and a sub tank (35) which has a smaller capacity than the main tank (34), is formed as a separate body from the main tank (34) and is connected to a lower portion of the main tank (34), and wherein the first thermistor (42) and the float-type fuel quantity sensor (41) are arranged in the main tank (34), with the float-type fuel quantity sensor being disposed below the recessed portion (34a), and the second thermistor (43) is arranged in the sub tank (35).

7. A device for detecting the quantity of remaining fuel in a vehicle fuel tank according to any one of claims 1 to 6, wherein the inside of the fuel tank (33) is divided into a plurality of zones (Z1, Z2, Z3, Z4, Z5) corresponding to respective ranges of remaining fuel quantity, including a first zone (Z1) disposed above a first liquid surface level (L1) detected by the first thermistor (42) and a second zone (Z2) disposed between a second liquid surface level (L2) at the upper limit of the range of motion of the float-type fuel quantity sensor (41) and the first liquid surface level (L1), and the arithmetic operation means (44) determines which one of the plurality of zones (Z1 to Z5) the remaining fuel quantity is in based on a liquid surface level detected by the float-type fuel quantity sensor (41) and liquid surface levels detected by the first and second thermistors (42, 43) after a predetermined time has elapsed from when the ignition switch (55) assumed an ON state.

8. A device for detecting the quantity of remaining fuel in a vehicle fuel tank according to claim 7, wherein the arithmetic operation means (44) sets a reference remaining fuel quantity, which becomes the reference for calculation of the remaining fuel quantity, based on the zone which the fuel quantity is currently in and the zone which the fuel quantity was in after a predetermined time elapsed from when the ignition switch (55) assumed an ON state, and calculates the remaining fuel quantity based on the reference remaining fuel quantity and fuel consumption with time.

9. A device for detecting the quantity of remaining fuel in a vehicle fuel tank according to claim 7, wherein the arithmetic operation means (44) sets a reference remaining fuel quantity, which becomes the reference for calculation of the remaining fuel quantity, based on the zone which the fuel quantity is currently in, the zone which the fuel quantity was in after a predetermined time elapsed from when the ignition switch (55) assumed an ON state, and the zone which the fuel quantity was in when the ignition switch (55) was turned off the previous time, and calculates the remaining fuel quantity based on the reference remaining fuel quantity and fuel consumption with time.

10. A device for detecting the quantity of remaining fuel in a vehicle fuel tank according to claim 8, wherein when the present zone is the second zone (Z2), the arithmetic operation means (44) determines in a first determination whether or not the zone which the fuel quantity was in when the predetermined time elapsed from when the ignition switch (55) assumed an ON state was the first zone (Z1), and sets the reference remaining fuel quantity to a value corresponding to the first liquid surface level (L1) if it is determined in the first determination that the zone which the fuel quantity was in when the predetermined time elapsed from when the ignition switch (55) assumed an ON state was the first zone (Z1).

11. A device for detecting the quantity of remaining fuel in a vehicle fuel tank according to claim 9, wherein when the present zone is the second zone (Z2), the arithmetic operation means (44) determines in a first determination whether or not the zone which the fuel quantity was in when the predetermined time elapsed from when the ignition switch (55) assumed an ON state was the first zone (Z1), and if it is determined in the first determination that the zone which the fuel quantity was in when the predetermined time elapsed from when the ignition switch (55) assumed an ON state was a zone other than the first zone (Z1), the arithmetic operation means (44) sets the reference remaining fuel quantity to a value corresponding to the first liquid surface level (L1) if the fuel quantity was in the first zone (Z1) when the ignition switch (55) was turned off the previous time.

12. A device for detecting the quantity of remaining fuel in a vehicle fuel tank according to claim 11, further including a memory means (56) which stores the remaining fuel quantity at the point in time when the ignition switch (55) was turned off the previous time, and if it is determined in the first determination that the zone which the fuel quantity was in when the predetermined time elapsed from when the ignition switch (55) assumed an ON state was a zone other than the first zone (Z1), the arithmetic operation means (44) determines the zone which the remaining fuel quantity was in when the ignition switch (55) was turned off the previous time, and sets the reference remaining fuel quantity to the value of the remaining fuel quantity stored in the memory means (56) if it is determined that the remaining fuel quantity was in the second zone (Z2) when the ignition switch (55) was turned off the previous time.

13. A device for detecting the quantity of remaining fuel in a vehicle fuel tank according to claim 11, wherein if the arithmetic operation means (44) determines that the remaining fuel quantity when the ignition switch (55) was turned off the previous time was in a zone other than the first zone (Z1) and the second zone (Z2), it sets the reference remaining fuel quantity to a value corresponding to the second liquid surface level (L2).

14. A device for detecting the quantity of remaining fuel in a vehicle fuel tank according to any one of claims 7 to 13, wherein the arithmetic operation means (44) sets the remaining fuel quantity to "0" when the determination of the zone (Z1 to Z5) is not possible.

## Patentansprüche

1. Vorrichtung zum Erfassen einer Kraftstoffrestmenge in einem Fahrzeugkraftstofftank (33), enthaltend: einen schwimmerartigen Kraftstoffmengensensor (41) und Thermistoren (42, 43) zum Erfassen eines Flüssigkeitsoberflächenpegels in Regionen außerhalb des Bewegungsbereichs des Schwimmers des schwimmerartigen Kraftstoffmengensensors (41), der innerhalb des Kraftstofftanks (33) angeordnet ist, worin
der erste Thermistor (42) höher angeordnet ist als eine Obergrenze des Bewegungsbereichs des Schwimmers des schwimmerartigen Kraftstoffmengensensors (41), und der zweite Thermistor (43) niedriger angeordnet ist als eine Untergrenze des Bewegungsbereichs des Schwimmers des schwimmerartigen Kraftstoffmengensensors (41), und ferner enthaltend:
ein Arithmetikoperationsmittel (44), das konfiguriert ist, um basierend auf Flüssigoberflächenpegeln, die von dem schwimmerartigen Kraftstoffmengensensor (41), dem ersten Thermistor (42) und dem zweiten Thermistor (43) erfasst werden, eine in dem Kraftstofftank (33) verbleibende Kraftstoffmenge zu berechnen, worin das Arithmetikoperationsmittel (44) konfiguriert ist, um basierend auf dem Flüssigkeitsoberflächenpegel, der von dem schwimmerartigen Kraftstoffmengensensor (41) erfasst wird, unmittelbar nachdem es ein Ein-Zustandssignal von einem Zündschalter (55) empfängt, die Kraftstoffrestmenge zu berechnen.

2. Vorrichtung zum Erfassen der Kraftstoffrestmenge in einem Fahrzeugkraftstofftank nach Anspruch 1, worin das Arithmetikoperationsmittel (44) Erfassungswerte der ersten und zweiten Thermistoren (42, 43) als normale Erfassungswerte betrachtet, nachdem die vorbestimmte Zeit abgelaufen ist, seit der Zündschalter (55) einen Ein-Zustand eingenommen hat, und die Kraftstoffrestmenge basierend auf den Flüssigkeitspegeln berechnet, die von dem schwimmerartigen Kraftstoffmengensensor (41), dem ersten Thermistor (42) und dem zweiten Thermistor (43) erfasst werden, nachdem die vorbestimmte Zeit abgelaufen ist, seit der Zündschalter (54) einen Ein-Zustand eingenommen hat.

3. Vorrichtung zum Erfassen der Kraftstoffrestmenge in einem Fahrzeugkraftstofftank nach Anspruch 2, worin eine Restmengenanzeige (47), die die Kraftstoffrestmenge basierend auf einem Berechnungsergebnis des Arithmetikorperationsmittels (44) anzeigt, einen Indikator (48) enthält, der entsprechend dem Berechnungsergebnis betätigt wird, und eine Zeit für den Indikator (48), um sich von einem unteren Grenzwert zu einem oberen Grenzwert des Indikators zu bewegen, auf die vorbestimmte Zeit oder länger gesetzt wird.

4. Vorrichtung zum Erfassen der Kraftstoffrestmenge in einem Fahrzeugkraftstofftank nach einem der Ansprüche 1 bis 3, worin die Kraftstoffrestmengenerfassungsvorrichtung ein Speichermittel (56) enthält, das die Kraftstoffrestmenge zu einem Zeitpunkt speichert, wenn der Zündschalter (55) das vorherige Mal ausgeschaltet wurde, und wenn der Schwimmer des schwimmerartigen Kraftstoffmengensensors (41) an der Untergrenze seines Bewegungsbereichs ist, unmittelbar nachdem der Zündschalter (55) eingeschaltet wird, das Arithmetikoperationsmittel (44) die in dem Speichermittel (56) gespeicherte Kraftstoffrestmenge als die Kraftstoffrestmenge nimmt.

5. Vorrichtung zum Erfassen der Kraftstoffrestmenge in einem Fahrzeugkraftstofftank nach einem der Ansprüche 1 bis 4, worin die Vorrichtung ferner ein Kraftstoffeinspritzsteuermittel (57) enthält, das die Kraftstoffeinspritzung von Kraftstoffeinspritzventilen (32F, 32R) steuert/regelt, die mit Kraftstoff vom Kraftstofftank (33) versorgt werden, und das Arithmetikoperationsmittel (44) basierend auf der eingespritzten Kraftstoffmenge gemäß Steuerung/Regelung durch das Kraftstoffeinspritzsteuerungsmittel (57) die Kraftstoffrestmenge berechnet, wenn sie sich zwischen einem ersten Flüssigkeitsoberflächenpegel (L1), der von dem ersten Thermistor (42) erfasst wird, und einem zweiten Flüssigkeitsoberflächenpegel (L2) an der Obergrenze des Bewegungsbereichs des schwimmerartigen Kraftstoffmengensensors (41) befindet, oder wenn sie sich zwischen einem dritten Flüssigkeitsoberflächenpegel (L3) an der Untergrenze des Bewegungsbereichs des schwimmerartigen Kraftstoffmengensensors (41) und einem vierten Flüssigkeitsoberflächenpegel (L4), der von dem zweiten Thermistor (43) erfasst wird, befindet.

6. Vorrichtung zum Erfassen der Kraftstoffrestmenge in einem Fahrzeugkraftstofftank nach einem der Ansprüche 1 bis 5, worin der Kraftstofftank (33) einen Haupttank (34) enthält, der an seiner Oberseite einen nach unten vertieften Abschnitt (34a) aufweist, und ein Hilfstank (35), der eine kleinere Kapazität als der Haupttank (34) hat, als vom Haupttank (34) separater Körper ausgebildet ist und mit einem unteren Abschnitt des Haupttanks (34) verbunden ist, und worin der erste Thermistor (42) und der schwimmerartige Kraftstoffmengensensor (41) in dem Haupttank (34) angeordnet sind, wobei der schwimmerartige Kraftstoffmengensensor unter dem vertieften Abschnitt (34a) angeordnet ist und der zweite Thermistor (43) in dem Hilfstank (35) angeordnet ist.

7. Vorrichtung zum Erfassen der Kraftstoffrestmenge in einem Fahrzeugkraftstofftank nach einem der Ansprüche 1 bis 6, worin die Innenseite des Kraftstofftanks (33) in eine Mehrzahl von Zonen (Z1, Z2, Z3, Z4, Z5) entsprechend jeweiligen Bereichen der Kraftstoffrestmenge unterteilt ist, einschließlich einer ersten Zone (Z1), die über einem vom ersten Thermistor (42) erfassten ersten Flüssigkeitsoberflächenpegel (L1) angeordnet ist, und einer zweiten Zone (Z2), die zwischen einem zweiten Flüssigkeitsoberflächenpegel (L2) an der Obergrenze des Bewegungsbereichs des schwimmerartigen Kraftstoffmengensensors (41) und dem ersten Flüssigkeitsoberflächenpegel (L1) angeordnet ist, und das Arithmetikoperationsmittel (44) basierend auf einem vom schwimmerartigen Kraftstoffmengensensor (41) erfassten Flüssigkeitsoberflächenpegel und den von den ersten und zweiten Thermistoren (42, 43) erfassten Flüssigkeitsoberflächenpegeln, bestimmt, in welcher der Mehrzahl von Zonen (Z1 bis Z5) sich die Kraftstoffrestmenge befindet, nachdem eine vorbestimmte Zeit abgelaufen ist, seit der Zündschalter (55) einen Ein-Zustand angenommen hat.

8. Vorrichtung zum Erfassen der Kraftstoffrestmenge in einem Fahrzeugkraftstofftank nach Anspruch 7, worin das Arithmetikoperationsmittel (44) eine Referenzkraftstoffmenge, welche die Referenz zur Berechnung der Kraftstoffrestmenge wird, basierend auf der Zone, in der sich die Kraftstoffmenge gegenwärtig befindet, und der Zone, in der sich die Kraftstoffmenge nach einer vorbestimmten Zeit befunden hat, die abgelaufen ist, seit der Zündschalter (55) einen Ein-Zustand eingenommen hat, setzt, und die Kraftstoffrestmenge basierend auf der Referenzrestkraftstoffmenge und dem zeitlichen Kraftstoffverbrauch berechnet.

9. Vorrichtung zum Erfassen der Kraftstoffrestmenge in einem Fahrzeugkraftstofftank nach Anspruch 7, worin das Arithmetikoperationsmittel (44) eine Referenzrestkraftstoffmenge, welche die Referenz zur Berechnung der Kraftstoffrestmenge wird, basierend auf der Zone, in der sich die Kraftstoffmenge gegenwärtig befindet, der Zone, in der sich die Kraftstoffmenge nach Ablauf einer vorbestimmten Zeit befand, seit der Zündschalter (55) einen Ein-Zustand eingenommen hat, und der Zone, in der sich die Kraftstoffmenge befand, wenn der Zündschalter (55) das vorherige Mal ausgeschaltet wurde, setzt, und die Kraftstoffrestmenge basierend auf der Referenzrestkraftstoffmenge und dem zeitlichen Kraftstoffverbrauch berechnet.

10. Vorrichtung zum Erfassen der Kraftstoffrestmenge in einem Fahrzeugkraftstofftank nach Anspruch 8, worin, wenn die gegenwärtige Zone die zweite Zone (Z2) ist, das Arithmetikoperationsmittel (44) in einer ersten Bestimmung bestimmt, ob die Zone, in der sich die Kraftstoffmenge befand, wenn die vorbestimmte Zeit abgelaufen ist, seit der Zündschalter (55) einen Ein-Zustand eingenommen hat, die erste Zone (Z1) war, und die Referenzrestkraftstoffmenge auf einen dem ersten Flüssigkeitsoberflächenpegel (L1) entsprechenden Wert setzt, wenn in der ersten Bestimmung bestimmt wird, dass die Zone, in der sich die Kraftstoffmenge befand, wenn vorbestimmte Zeit abgelaufen ist, seit der Zündschalter (55) einen Ein-Zustand eingenommen hat, die erste Zone (Z1) war.

11. Vorrichtung zum Erfassen der Kraftstoffrestmenge in einem Fahrzeugkraftstofftank nach Anspruch 9, worin, wenn die gegenwärtige Zone die zweite Zone (Z2) ist, das Arithmetikoperationsmittel (44) in einer ersten Bestimmung bestimmt, ob die Zone, in der sich die Kraftstoffmenge befand, wenn die vorbestimmte Zeit abgelaufen ist, seit der Zündschalter (55) einen Ein-Zustand eingenommen hat, die erste Zone (Z1) war, und wenn in der ersten Bestimmung bestimmt wird, dass die Zone, in der sich die Kraftstoffmenge befand, wenn die vorbestimmte Zeit abgelaufen ist, seit der Zündschalter (55) einen Ein-Zustand eingenommen hat, eine andere Zone als die erste Zone (Z1) war, das Arithmetikoperationsmittel (44) die Referenzkraftstoffrestmenge auf einen Wert entsprechend dem ersten Flüssigkeitsoberflächenpegel (L1) setzt, wenn sich die Kraftstoffmenge in der ersten Zone (Z1) befand, wenn der Zündschalter (55) das vorherige Mal ausgeschaltet wurde.

12. Vorrichtung zum Erfassen der Kraftstoffrestmenge in einem Fahrzeugkraftstofftank nach Anspruch 11, die ferner ein Speichermittel (56) enthält, das die Kraftstoffrestmenge zu einem Zeitpunkt speichert, wenn der Zündschalter (55) das vorherige Mal ausgeschaltet wurde, und wenn in der ersten Bestimmung bestimmt wird, dass die Zone, in der sich die Kraftstoffmenge befand, wenn die vorbestimmte Zeit abgelaufen ist, seit der Zündschalter (55) einen Ein-Zustand eingenommen hat, eine andere Zone als die erste Zone (Z1) war, das Arithmetikoperationsmittel (44) die Zone bestimmt, in der sich die Kraftstoffrestmenge befand, wenn der Zündschalter (55) das vorherige Mal ausgeschaltet wurde, und die Referenzkraftstoffrestmenge auf einen im Speichermittel (56) gespeicherten Wert der Kraftstoffrestmenge setzt, wenn bestimmt wird, dass sich die Kraftstoffrestmenge in der zweiten Zone (Z2) befand, wenn der Zündschalter (55) das vorherige Mal ausgeschaltet wurde.

13. Vorrichtung zum Erfassen der Kraftstoffrestmenge in einem Fahrzeugkraftstofftank nach Anspruch 11, worin, wenn das Arithmetikoperationsmittel (44) bestimmt, dass sich die Kraftstoffrestmenge, wenn der Zündschalter (55) das vorherige Mal ausgeschaltet wurde, in einer anderen Zone als der ersten Zone (Z1) der zweiten Zone (Z2) befand, es die Referenzkraftstoffrestmenge auf einen Wert entsprechend dem zweiten Flüssigkeitsoberflächenpegel (L2) setzt.

14. Vorrichtung zum Erfassen der Kraftstoffrestmenge in einem Fahrzeugkraftstofftank nach einem der Ansprüche 7 bis 13, worin das Arithmetikoperationsmittel (44) die Kraftstoffrestmenge auf "0" setzt, wenn die Bestimmung der Zone (Z1 bis Z5) nicht möglich ist.

## Revendications

1. Dispositif permettant de détecter la quantité de carburant restant dans un réservoir de carburant de véhicule (33), comprenant un détecteur de quantité de carburant de type à flotteur (41) et des thermistances (42, 43) permettant de détecter un niveau de surface de liquide dans des régions en dehors de la plage de mouvement du flotteur du détecteur de quantité de carburant de type à flotteur (41) agencé à l'intérieur du réservoir de carburant (33), dans lequel
la première thermistance (42) est agencée plus haut qu'une limite supérieure de la plage de mouvement du flotteur du détecteur de quantité de carburant de type à flotteur (41), et la seconde thermistance (43) est agencée plus bas qu'une limite inférieure de la plage de mouvement du flotteur du détecteur de quantité de carburant de type à flotteur (41), et comprenant en outre
des moyens d'opération arithmétique (44) configurés pour calculer une quantité de carburant restant dans le réservoir de carburant (33) d'après des niveaux de surface de liquide qui sont détectés par le détecteur de quantité de carburant de type à flotteur (41), la première thermistance (42) et la seconde thermistance (43), dans lequel lesdits moyens d'opération arithmétique (44) sont configurés pour calculer la quantité de carburant restant d'après le niveau de surface de liquide détecté par le détecteur de quantité de carburant de type à flotteur (41) immédiatement après réception d'un signal d'état CONDUCTEUR d'un commutateur d'allumage (55).

2. Dispositif permettant de détecter la quantité de carburant restant dans un réservoir de carburant de véhicule selon la revendication 1, dans lequel les moyens d'opération arithmétique (44) considèrent des valeurs de détection des première et seconde thermistances (42, 43) comme des valeurs de détection normales après qu'un temps prédéterminé s'est écoulé depuis le moment où le commutateur d'allumage (55) a adopté un état CONDUCTEUR, et calcule la quantité de carburant restant d'après les niveaux de surface de liquide détectés par le détecteur de quantité de carburant de type à flotteur (41), la première thermistance (42) et la seconde thermistance (43) après que le temps prédéterminé s'est écoulé à partir du moment où le commutateur d'allumage (55) a adopté un état CONDUCTEUR.

3. Dispositif permettant de détecter la quantité de carburant restant dans un réservoir de carburant de véhicule selon la revendication 2, dans lequel un compteur de quantité restante (47) qui affiche la quantité de carburant restant d'après un résultat de calcul des moyens d'opération arithmétique (44) comprend un indicateur (48) qui est actionné selon le résultat du calcul, et un temps pour que l'indicateur (48) se déplace d'une valeur limite inférieure vers une valeur limite supérieure de l'indicateur est établi au temps prédéterminé ou plus.

4. Dispositif permettant de détecter la quantité de carburant restant dans un réservoir de carburant de véhicule selon l'une quelconque des revendications 1 à 3, dans lequel le dispositif de détection de carburant restant comprend des moyens de mémoire (56) qui enregistrent la quantité de carburant restant à un moment donné où le commutateur d'allumage (55) a été éteint la fois précédente, et où le flotteur du détecteur de quantité de carburant de type à flotteur (41) est à la limite inférieure de sa plage de mouvement immédiatement après que le commutateur d'allumage (55) est allumé, les moyens d'opération arithmétique (44) considèrent la quantité de carburant restant enregistrée dans les moyens de mémoire (56) comme la quantité de carburant restant.

5. Dispositif permettant de détecter la quantité de carburant restant dans un réservoir de carburant de véhicule selon l'une quelconque des revendications 1 à 4, dans lequel le dispositif comprend en outre des moyens de régulation d'injection de carburant (57) qui régulent l'injection de carburant à partir de soupapes d'injection de carburant (32F, 32R) alimentées en carburant provenant du réservoir de carburant (33), et les moyens d'opération arithmétique (44) calculent la quantité de carburant restant lorsque celle-ci est entre un premier niveau de surface de liquide (L1) détecté par la première thermistance (42) et un deuxième niveau de surface de liquide (L2) à la limite supérieure de la plage de mouvement du détecteur de quantité de carburant de type à flotteur (41), ou lorsqu'elle se situe entre un troisième niveau de surface de liquide (L3) à la limite inférieure de la plage de mouvement du détecteur de quantité de carburant de type à flotteur (41) et un quatrième niveau de surface de liquide (L4) détecté par la seconde thermistance (43), d'après la quantité de carburant injecté telle que régulée par les moyens de régulation d'injection de carburant (57).

6. Dispositif permettant de détecter la quantité de carburant restant dans un réservoir de carburant de véhicule selon l'une quelconque des revendications 1 à 5, dans lequel le réservoir de carburant (33) comprend un réservoir principal (34) qui a une portion évidée en retrait vers le bas (34a) sur une surface supérieure de celui-ci, et un sous-réservoir (35) qui a une plus petite capacité que le réservoir principal (34), est formé en tant que corps séparé du réservoir principal (34) et est raccordé à une portion inférieure du réservoir principal (34), et dans lequel la première thermistance (42) et le détecteur de quantité de carburant de type à flotteur (41) sont agencés dans le réservoir principal (34), le détecteur de quantité de détecteur de type à flotteur étant disposé sous la portion évidée (34a), et la seconde thermistance (43) est agencée dans le sous-réservoir (35).

7. Dispositif permettant de détecter la quantité de carburant restant dans un réservoir de carburant de véhicule selon l'une quelconque des revendications 1 à 6, dans lequel l'intérieur du réservoir de carburant (33) est divisé en une pluralité de zones (Z1, Z2, Z3, Z4, Z5) correspondant aux plages respectives de quantité de carburant restant, comprenant une première zone (Z1) disposée au-dessus d'un premier niveau de surface de liquide (L1) détecté par la première thermistance (42) et une deuxième zone (Z2) disposée entre un deuxième niveau de surface de liquide (L2) à la limite supérieure de la plage de mouvement du détecteur de quantité de carburant de type à flotteur (41) et le premier niveau de surface de liquide (L1), et les moyens d'opération arithmétique (44) déterminent dans laquelle de la pluralité de zones (Z1 à Z5) la quantité de carburant restant se situe d'après un niveau de surface de liquide détecté par le détecteur de quantité de carburant de type à flotteur (41) et des niveaux de surface de liquide détectés par les première et seconde thermistances (42, 43) après qu'un temps prédéterminé s'est écoulé à partir du moment où le commutateur d'allumage (55) a adopté un état CONDUCTEUR.

8. Dispositif permettant de détecter la quantité de carburant restant dans un réservoir de carburant de véhicule selon la revendication 7, dans lequel les moyens d'opération arithmétique (44) établissent une quantité de carburant restant de référence, qui devient la référence pour le calcul de la quantité de carburant restant, d'après la zone dans laquelle se situe actuellement la quantité de carburant et la zone dans laquelle se situait la quantité de carburant après qu'un temps prédéterminé s'est écoulé à partir du moment où le commutateur d'allumage (55) a adopté un état CONDUCTEUR, et calculent la quantité de carburant restant d'après la quantité de carburant restant de référence et la consommation de carburant dans le temps.

9. Dispositif permettant de détecter la quantité de carburant restant dans un réservoir de carburant de véhicule selon la revendication 7, dans lequel les moyens d'opération arithmétique (44) établissent une quantité de carburant restant de référence, qui devient la référence pour le calcul de la quantité de carburant restant, d'après la zone dans laquelle se situe actuellement la quantité de carburant, la zone dans laquelle se situait la quantité de carburant après qu'un temps prédéterminé s'est écoulé à partir du moment où le commutateur d'allumage (55) a adopté un état CONDUCTEUR, et la zone dans laquelle se situait la quantité de carburant lorsque le commutateur d'allumage (55) a été éteint la fois précédente, et calculent la quantité de carburant restant d'après la quantité de carburant restant de référence et la consommation de carburant dans le temps.

10. Dispositif permettant de détecter la quantité de carburant restant dans un réservoir de carburant de véhicule selon la revendication 8, dans lequel lorsque la zone actuelle est la deuxième zone (Z2), les moyens d'opération arithmétique (44) déterminent lors d'une première détermination si la zone dans laquelle se situait la quantité de carburant lorsque le temps prédéterminé s'est écoulé à partir du moment où le commutateur d'allumage (55) a adopté un état CONDUCTEUR était la première zone (Z1) ou non, et établissent la quantité de carburant restant de référence à une valeur correspondant au premier niveau de surface de liquide (L1) s'il a été déterminé lors d'une première détermination que la zone où se situait la quantité de carburant lorsque le temps prédéterminé s'est écoulé à partir du moment où le commutateur d'allumage (55) a adopté un état CONDUCTEUR était la première zone (Z1).

11. Dispositif permettant de détecter la quantité de carburant restant dans un réservoir de carburant de véhicule selon la revendication 9, dans lequel lorsque la zone actuelle est la deuxième zone (Z2), les moyens d'opération arithmétique (44) déterminent lors d'une première détermination si la zone dans laquelle se situait la quantité de carburant lorsque le temps prédéterminé s'est écoulé à partir du moment où le commutateur d'allumage (55) a adopté un état CONDUCTEUR était la première zone (Z1) ou non, et s'il est déterminé lors de la première détermination que la zone dans laquelle se trouvait la quantité de carburant lorsque le temps prédéterminé s'est écoulé à partir du moment où le commutateur d'allumage (55) a adopté un état CONDUCTEUR était une zone autre que la première zone (Z1), les moyens d'opération arithmétique (44) établissent la quantité de carburant restant de référence à une valeur correspondant au premier niveau de surface de liquide (L1) si la quantité de carburant était dans la première zone (Z1) lorsque le commutateur d'allumage (55) a été éteint la fois précédente.

12. Dispositif permettant de détecter la quantité de carburant restant dans un réservoir de carburant de véhicule selon la revendication 11, comprenant en outre des moyens de mémoire (56) qui enregistrent la quantité de carburant restant au moment donné où le commutateur d'allumage (55) a été éteint la fois précédente, et s'il est déterminé lors de la première détermination que la zone dans laquelle la quantité de carburant se situait lorsque le temps prédéterminé s'est écoulé à partir du moment où le commutateur d'allumage (55) a adopté un état CONDUCTEUR était une zone autre que la première zone (Z1), les moyens d'opération arithmétique (44) déterminent la zone dans laquelle se situait la quantité de carburant restant lorsque le commutateur d'allumage (55) a été éteint la fois précédente, et établissent la quantité de carburant restant de référence à la valeur de quantité de carburant restant enregistrée dans les moyens de mémoire (56) si la quantité de carburant restant est déterminée comme étant dans la deuxième zone (Z2) lorsque le commutateur d'allumage (55) a été éteint la fois précédente.

13. Dispositif permettant de détecter la quantité de carburant restant dans un réservoir de carburant de véhicule selon la revendication 11, dans lequel si les moyens d'opération arithmétique (44) déterminent que la quantité de carburant restant lorsque le commutateur d'allumage (55) a été éteint la fois précédents était dans une zone autre que la première zone (Z1) et la deuxième zone (Z2), ils établissent la quantité de carburant restant de référence à une valeur correspondant au deuxième niveau de surface de liquide (L2).

14. Dispositif permettant de détecter la quantité de carburant restant dans un réservoir de carburant de véhicule selon l'une quelconque des revendications 7 à 13, dans lequel les moyens d'opération arithmétique (44) établissent la quantité de carburant restant à « 0 » lorsque la détermination de la zone (Z1 à Z5) n'est pas possible.
